**Europäisches Patentamt**

**European Patent Office**

**Office européen des brevets**

(11) Veröffentlichungsnummer : **0 087 128**
**B1**

(12) # EUROPÄISCHE PATENTSCHRIFT

(45) Veröffentlichungstag der Patentschrift :
**19.12.84**

(21) Anmeldenummer : **83101519.3**

(22) Anmeldetag : **17.02.83**

(51) Int. Cl.³ : **C 02 F 3/30//** C02F1/24,
C02F1/52

(54) **Verfahren und Vorrichtung zur biologischen Reinigung von phosphathaltigem Abwasser.**

(30) Priorität : **23.02.82 DE 3206444**

(43) Veröffentlichungstag der Anmeldung :
**31.08.83 Patentblatt 83/35**

(45) Bekanntmachung des Hinweises auf die Patenterteilung : **19.12.84 Patentblatt 84/51**

(84) Benannte Vertragsstaaten :
**AT CH DE FR LI NL SE**

(56) Entgegenhaltungen :
**US-A- 3 787 316**

(73) Patentinhaber : **Linde Aktiengesellschaft**
**Abraham-Lincoln-Strasse 21**
**D-6200 Wiesbaden (DE)**

(72) Erfinder : **Reimann, Hans, Dr. rer. nat.**
**Rudolf-Wilke-Weg 21**
**D-8000 München 71 (DE)**

(74) Vertreter : **Schaefer, Gerhard, Dr.**
**Linde Aktiengesellschaft Zentrale Patentabteilung**
**D-8023 Höllriegelskreuth (DE)**

EP 0 087 128 B1

**Beschreibung**

Die Erfindung betrifft ein Verfahren zur biologischen Reinigung von phosphathaltigem Abwasser, bei dem das Abwasser in einem Belebungsbecken in Gegenwart von belebtem Schlamm zum Abbau organischer Kohlenwasserstoffverbindungen und zur Aufnahme von Phosphat durch in Belebtschlamm vorhandene Mikroorganismen begast wird, das Abwasser-Belebtschlamm-Gemisch aus dem Belebungsbecken abgezogen und in einer Nachklärung zu gereinigtem, im wesentlichen phosphatfreiem Wasser und phosphathaltigem Schlamm aufgeteilt wird, der zumindest teilweise als Rücklaufschlamm in das Belebungsbecken zurückgeführt wird, sowie eine Vorrichtung zur Durchführung des Verfahrens.

Ein derartiges Verfahren zum Abtrennen von Phosphaten aus Abwasser wird beispielsweise in der US-PS 4 141 822 beschrieben. Dabei wird bei diesem bekannten Verfahren der mit Phosphat angereicherte Schlamm einer Phosphatabtrennung zugeleitet und zum Absetzen gebracht. Mindestens ein Teil des abgesetzten Schlammes wird unter anaeroben Bedingungen für eine Zeitdauer gehalten, die ausreicht, um Phosphat in die flüssige Phase des abgesetzten Schlammes freizusetzen, die dann in die überstehende Flüssigkeit aufsteigt und eine mit Phosphat angereicherte Flüssigkeit bildet. Mindestens ein Teil des abgesetzten und eingedickten phosphatarmen Schlammes wird von einem unteren Abschnitt der Phosphatabtrennzone als belebter Schlamm in das Belebungs- bzw. Begasungsbecken zurückgeleitet. Um das in die flüssige Phase des anaeroben Schlammes freigesetzte Phosphat beschleunigt in die überstehende Flüssigkeit zu überführen, wird der anaerobe Schlamm mit einem wäßrigen Medium, das einen geringeren Phosphatgehalt hat als der anaerobe Schlamm, in Kontakt gebracht.

Dieses Verfahren hat jedoch den Nachteil, daß die Phosphatabtrenneinrichtung für die langen Aufenthaltszeiten unwirtschaftlich groß ausgebildet sein muß, damit der Schlamm genügend eindicken kann. Durch das Inberührungbringen mit einem wäßrigen Medium (Elutriation) wird überdies der zu behandelnde Seitenstrom in nachteiliger Weise vergrößert. Ein weiterer Nachteil des bekannten Verfahrens liegt darin, daß der Belebtschlamm bei niedrigen Temperaturen, was insbesondere für die Wintermonate gilt, das Phosphat nur langsam abgibt, so daß sich auch dadurch die Aufenthaltszeiten in der Phosphatabtrennzone unnötig verlängern.

Aufgabe der vorliegenden Erfindung ist es daher, die aufgezeigten Mängel zu beseitigen und somit die Phosphatabtrennung wirtschaftlicher zu gestalten.

Diese Aufgabe wird erfindungsgemäß dadurch gelöst, daß aus dem Belebungsbecken Abwasser-Belebtschlamm-Gemisch und/oder aus der Nachklärung Rücklaufschlamm abgezweigt und zum Eindicken flotiert wird, phosphatarmes Flotat abgezogen wird, der erhaltene phosphatreiche Flotatschlamm erwärmt und nach der Erwärmung sowohl anaerob behandelt als auch mit einer wäßrigen Phase, vorzugsweise Abwasser vermischt wird, daß das Abwasser-Flotatschlamm-Gemisch anschließend einer Phosphatabtrennung unterworfen wird und daß der dabei anfallende phosphatarme Schlamm in das Belebungsbecken zurückgeführt und die mit Phosphat angereicherte Flüssigkeit weiterbehandelt wird.

Durch das Erwärmen und darauffolgende anaerobe Behandlung wird in überraschender Weise eine weitgehende und schnelle Phosphatfreisetzung aus den Mikroorganismen in die flüssige Phase des eingedickten Schlammes erreicht. Der anschließende Zusatz von Abwasser ermöglicht es, daß das freigesetzte Phosphat in die Flüssigkeit abgegeben werden kann, wodurch die Phosphatabtrennung vollständig durchgeführt werden kann. Dabei kann neben einem Teil des Rücklaufschlammes auch Abwasser-Belebtschlamm-Gemisch sowohl aus dem Belebungsbecken selbst als auch aus dem Ablauf des Belebungsbeckens behandelt werden. Das erfindungsgemäße Verfahren erlaubt eine verbesserte Abtrennung des phosphatarmen Schlammes von der phosphatreichen Flüssigkeit in wesentlich kürzerer Zeit unabhängig von der Jahreszeit. Dadurch können auch kleinere Einrichtungen, insbesondere für die Nacklärung und die Phosphatabtrennung, verwendet werden, die in ihren Herstellungskosten beträchtlich billiger sind.

In Weiterbildung des erfindungsgemäßen Verfahrens ist vorgesehen, daß die mit Phosphat angereicherte Flüssigkeit einer Phosphatfällung unterworfen und anschließend gegebenenfalls zum Belebungsbecken zurückgeführt wird. Die Erwärmung des Flotatschlammes wird vorzugsweise bis auf eine Temperatur von 20 bis 35 °C durchgeführt und zwar vorteilhaft autotherm durch Begasen mit Luft oder Sauerstoff oder alternativ mit Hilfe von Fremdwärme (Abfallwärme). Die Kosten, die hierfür anfallen, sind dabei im Vergleich zu den Einsparungen infolge kleinerer Einrichtungen und höherer Durchsatzmengen sowie erhöhter Reinigungsleistungen unerheblich. Insbesondere bei Sommertemperaturen des Abwassers und Belebtschlammes von 18 bis 20 °C ist es durch die autotherme Begasung bereits möglich, die gewünschten Temperaturen zu erreichen, während im Winter bei Abwasser- bzw. Belebtschlammtemperaturen von im Mittel nur 8 bis 10 °C sich die zusätzliche Erwärmung mit Hilfe von Fremdwärme als vorteilhaft erwiesen hat.

Nach einer weiteren bevorzugten Ausführungsform ist vorgesehen, während der anaeroben Behandlung einen pH-Wert von 4 bis 7, vorzugsweise 5,5 bis 6,5, einzustellen, wodurch das Phosphat beschleunigt in die Flüssigkeit übergeht.

Überdies besteht erfindungsgemäß die Möglichkeit, das phosphatarme Flotat zum einen Teil dem Abwasser-Belebtschlamm-Gemisch vor der Nachklärung zuzuführen, so daß eventuell noch vorhandene Feststoffe dort abgesetzt werden können, und zum anderen Teil mit Flotationsgas anzureichern und der Flotation wieder zuzuführen.

Die Erfindung betrifft außerdem eine Vorrichtung zur Durchführung des erfindungsgemäßen Verfahrens mit einem Belebungsbecken und einer an das Belebungsbecken über einen Ablauf nachgeschalteten Nachkläreinrichtung mit Schlammrücklauf zum Belebungsbecken, die dadurch gekennzeichnet, daß das Belebungsbecken und/oder der Ablauf des Belebungsbeckens und/oder der Schlammrücklauf mit einem als Eindicker wirkenden Flotationsbecken mit Flotatablauf und Flotatschlammableitung verbunden ist, daß die Flotatschlammableitung an eine Wärmebehandlungszone angeschlossen ist, daß der Wärmebehandlungszone sowohl eine Anaerobbehandlungszone als auch ein Zulauf für zu reinigendes Abwasser sowie eine Phosphatabtrenneinrichtung nachgeschaltet sind und daß die Phosphatabtrenneinrichtung einen Schlammrücklauf zum Belebungsbecken und einen Ablauf für mit Phosphat angereicherte Flüssigkeit aufweist.

Die Vorrichtung wird dabei bevorzugt so ausgebildet, daß die Wärmebehandlungszone als Begasungszone und die Phosphatabtrenneinrichtung vorteilhaft als Sedimentationsbecken ausgebildet sind. Dabei kann in dem Ablauf der Phosphatabtrenneinrichtung eine Einrichtung zur Phosphatfällung vorgesehen sein, die gegebenenfalls mit dem Belebungsbecken, bei Bedarf über eine Vorklärung, verbunden ist.

Nach einer weiteren Ausgestaltung der erfindungsgemäßen Vorrichtung ist der Wärmebehandlungszone vor der Anaerobbehandlungszone eine Mischstrecke nachgeschaltet und die Mischstrecke mit dem Zulauf für Abwasser verbunden.

Die Anaerobbehandlungszone kann mit Vorteil zweistufig ausgebildet sein, wobei der Zulauf für zu reinigendes Abwasser mit der zweiten Stufe verbunden ist.

Überdies ist vorgesehen, daß der Flotatablauf einerseits mit dem Belebungsbeckenablauf und andererseits mit einer an das Flotationsbecken angeschlossenen Sättigungseinrichtung für Flotationsgas verbunden ist.

Das erfindungsgemäße Verfahren sowie die dazugehörige Vorrichtung können bei allen Abwasserreinigungsanlagen zur Phosphatabtrennung eingesetzt werden.

Im folgenden sei die Erfindung anhand eines schematisch dargestellten Ausführungsbeispiels näher erläutert.

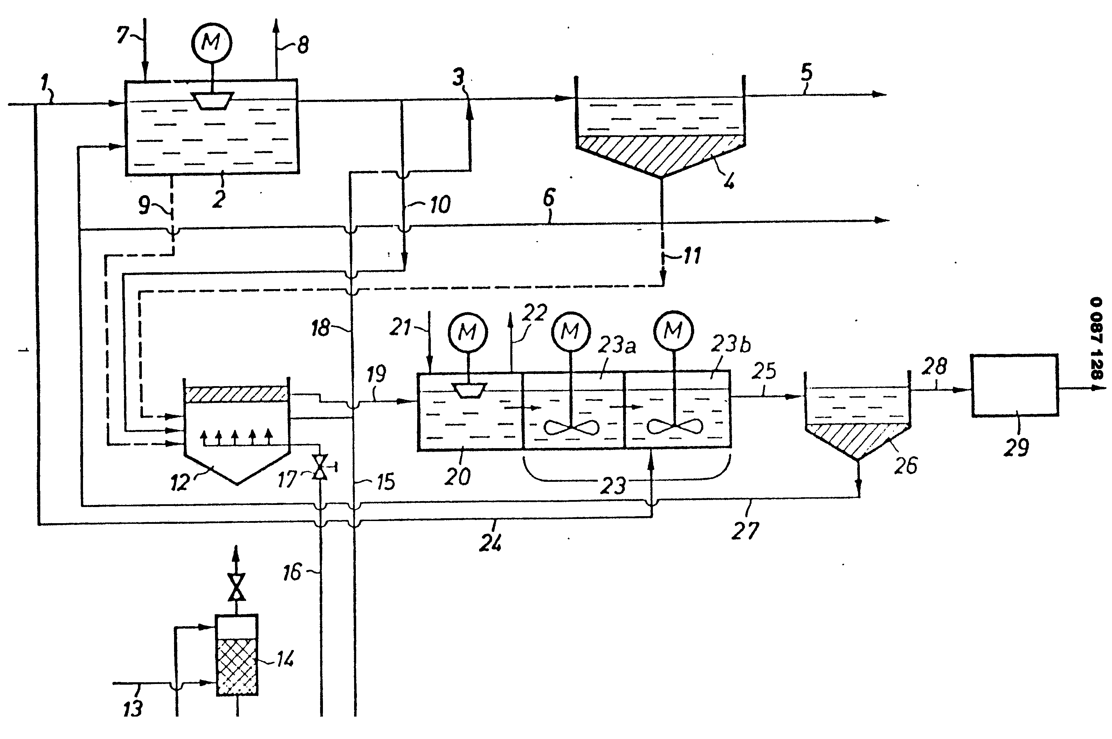

Gemäß der Figur besteht die dargestellte Abwasserreinigungsanlage im wesentlichen aus einem Zulauf 1 für zu reinigendes, phosphathaltiges Abwasser, einem Belebungsbecken 2 mit Ablauf 3 zu einem nachgeschalteten Nachklärbecken 4, an das ein Ablauf 5 für gereinigtes Abwasser und eine Schlammrücklaufleitung 6 zum Belebungsbecken angeschlossen sind. In der gezeigten Darstellung ist das Belebungsbecken 2 gegenüber der Atmosphäre abgedeckt. Bei Verwendung von Luft zur Begasung kann das Belebungsbecken jedoch auch offen ausgebildet sein. Im vorliegenden Fall wird Sauerstoff zur Begasung verwendet, der über Leitung 7 zugeführt wird und in bekannter Weise, z. B. über nahe dem Beckenboden angeordnete Gasverteiler oder über Oberflächenbelüfter, eingetragen wird. Verbrauchtes Abgas kann über Leitung 8 abgeblasen werden.

Das zu reinigende phosphathaltige Abwasser gelangt über den Zulauf 1 in das Belebungsbecken 2 und wird dort mit Rücklaufschlamm aus Leitung 6 und eingetragenem Sauerstoff vermischt, so daß die im Belebtschlamm vorhandenen Mikroorganismen die organischen Kohlenwasserstoffverbindungen im wesentlichen abbauen und überdies das im Abwasser vorhandene Phosphat aufnehmen. Das Abwasser-Belebtschlamm-Gemisch wird über den Ablauf 3 aus dem Belebungsbecken 2 abgezogen und dem Nachklärbecken 4 zugeleitet, aus dem das gereinigte, im wesentlichen phosphatfreie Wasser über Leitung 5 abgeleitet wird. Der abgesetzte phosphathaltige Schlamm wird über die Schlammrücklaufleitung 6 zumindest teilweise wieder in das Belebungsbecken 2 zurückgeführt.

Zur Phosphatabtrennung ist erfindungsgemäß vorgesehen, aus dem Belebungsbecken über eine Leitung 9 und/oder aus dem Belebungsbeckenablauf über eine Leitung 10 Abwasser-Belebtschlamm-Gemisch und/oder aus dem Nachklärbecken 4 über eine an Leitung 6 angeschlossene Stichleitung 11 Rücklaufschlamm abzuziehen und einem als Eindicker wirkenden Flotationsbecken 12 zuzuführen. In dem Flotationsbecken 12 wird der zu behandelnde Teilstrom mittels beispielsweise Luft flotiert bzw. eingedickt. Das Flotationsgas (Luft) wird dazu über eine Leitung 13 einer Sättigungseinrichtung 14 zugeführt und dort mit einem Teilstrom des aus dem Flotationsbecken über einen Ablauf 15 ablaufenden Flotats vermischt, so daß das Flotat mit der Luft unter Druck angereichert wird, und über Leitung 16 mit Entspannungsventil 17 in den unteren Teil des Flotationsbeckens geleitet. Durch die Entspannung in Ventil 17 wird die Luft wieder unter Bläschenbildung frei, wodurch der Schlamm nach oben getragen wird. Da die Flotation unter aeroben Bedingungen abläuft, geben die Mikroorganismen während dieser Behandlung das in den Zellen eingelagerte Phosphat nicht ab, so daß der anfallende Flotatschlamm phosphatreich und das Flotat phosphatarm ist.

Der Flotatablauf wird dabei, wie bereits beschrieben, einerseits mit Flotationsgas angereichert und in das Flotationsbecken zurückgeführt und andererseits über Leitung 18 dem Belebungsbeckenablauf 3 zugemischt. Auf diese Weise werden insbesondere gegebenenfalls noch im Flotat vorhandene Feststoffe dem Abwasser-Belebtschlamm-Gemisch beigemischt und können sich in dem Nachklärbecken absetzen.

Über Leitung 19 wird der phosphatreiche Flotatschlamm aus dem Flotationsbecken 12 abgezogen und in einer Wärmebehandlungszone erwärmt, und zwar bevorzugt auf Temperaturen von 20 bis 35 °C. Gemäß der Figur erfolgt die Erwärmung autotherm durch Begasen in einer — bei Verwendung von $O_2$ als Begasungsgas — gegenüber der Atmosphäre abgedeckten Zone 20. Das Begasungsgas wird dabei über eine Leitung 21 in bekannter Weise eingetragen und verbrauchtes Abgas über Leitung 22 abgezogen. Alternativ kann der Flotatschlamm auch mittels Fremdwärme erhitzt werden.

Der erwärmte Flotatschlamm wird in einer, im vorliegenden Falle zweistufigen, Anaerobbehandlungszone 23 in der ersten Behandlungsstufe 23a anaerob weiterbehandelt. Dabei setzen die Mikroorganismen in der relativ warmen Umgebung schnell die in den Zellen eingelagerten Phosphate in die flüssige Phase des eingedickten Schlammes frei. In der zweiten Behandlungsstufe 23b wird dem vorbehandelten Schlamm über eine Leitung 24, die an den Zulauf 1 angeschlossen ist, Abwasser beigemischt, wodurch sich der Inhalt der zweiten Behandlungsstufe 23b etwas abkühlt. Das zugeführte Abwasser wirkt dabei vor allem als ein Medium, in das das freigesetzte Phosphat übergehen kann. Außerdem wird der anaerobe Stoffwechsel der Mikroorganismen durch die im zulaufenden Abwasser vorhandenen Substrate angeregt, so daß mehr Phosphat freigesetzt wird. Alternativ kann dem vorbehandelten, das heißt eingedickten und erwärmten Schlamm aber auch Abwasser aus einer anderen Quelle beigemischt werden. Ebenso kann die Anaerobbehandlungszone nur einstufig ausgebildet und Abwasser vor der Anaerobbehandlung, z. B. auch in einer Mischstrecke, beigemischt werden.

Das Abwasser-Flotatschlamm-Gemisch wird über eine Leitung 25 aus der Anaerobbehandlungszone 23 abgezogen und einer Phosphatabtrenneinrichtung 26, die beispielsweise als Sedimentationsbecken ausgeführt ist, zugeführt. Dort trennt sich die phosphatreiche Flüssigkeit von dem phosphatarmen Schlamm, der als Rücklaufschlamm über Leitung 27 wieder dem Belebungsbecken 2 zugeleitet wird. Die phosphatreiche Flüssigkeit dagegen kann über eine Ablaufleitung 28 einer Einrichtung 29 zur Phosphatfällung und gegebenenfalls dem Belebungsbecken 2, nach Bedarf über eine Vorkläreinrichtung, zugeführt werden.

Als besondere Ausgestaltung ist außerdem vorgesehen, während der Anaerobbehandlung zusätzlich einen günstigen pH-Wert, d. h. zwischen 4 und 7, vorzugsweise 5,5 und 6,5, beispielsweise durch Einleiten von $CO_2$, einzustellen.

## Ansprüche

1. Verfahren zur biologischen Reinigung von phosphathaltigem Abwasser, bei dem das Abwasser in einem Belebungsbecken in Gegenwart von belebtem Schlamm zum Abbau organischer Kohlenwasserstoffverbindungen und zur Aufnahme von Phosphat durch im Belebtschlamm vorhandene Mikroorganismen begast wird, das Abwasser-Belebtschlamm-Gemisch aus dem Belebungsbecken abgezogen und in einer Nachklärung zu gereinigtem, im wesentlichen phosphatfreiem Wasser und phosphathaltigem Schlamm aufgeteilt wird, der zumindest teilweise als Rücklaufschlamm in das Belebungsbecken zurückgeführt wird, dadurch gekennzeichnet, daß aus dem Belebungsbecken Abwasser-Belebtschlamm-Gemisch und/oder aus der Nachklärung Rücklaufschlamm abgezweigt und zum Eindicken flotiert wird, phosphatarmes Flotat abgezogen wird, der phosphatreiche Flotatschlamm erwärmt, und nach der Erwärmung sowohl anaerob behandelt als auch mit einer wäßrigen Phase, vorzugsweise Abwasser vermischt wird, das so erhaltene Gemisch anschließend einer Phosphatabtrennung unterworfen wird und daß der dabei anfallende phosphatarme Schlamm in das Belebungsbecken zurückgeführt und die mit Phosphat angereicherte Flüssigkeit weiterbehandelt wird.

2. Verfahren nach Anspruch 1, dadurch gekennzeichnet, daß die mit Phosphat angereicherte Flüssigkeit einer Phosphatfällung unterworfen und anschließend gegebenenfalls zum Belebungsbecken zurückgeführt wird.

3. Verfahren nach Anspruch 1 oder 2, dadurch gekennzeichnet, daß die Erwärmung des Flotatschlamms bis auf eine Temperatur von 20 bis 35 °C durchgeführt wird.

4. Verfahren nach einem der Ansprüche 1 bis 3, dadurch gekennzeichnet, daß die Erwärmung des Flotatschlamms autotherm durch Begasen mit Luft oder Sauerstoff durchgeführt wird.

5. Verfahren nach einem der Ansprüche 1 bis 3, dadurch gekennzeichnet, daß die Erwärmung des Flotatschlamms mit Hilfe von Fremdwärme durchgeführt wird.

6. Verfahren nach einem der Ansprüche 1 bis 5, dadurch gekennzeichnet, daß während der anaeroben Behandlung ein pH-Wert von 4 bis 7, vorzugsweise 5,5 bis 6,5, eingestellt wird.

7. Verfahren nach einem der Ansprüche 1 bis 6, dadurch gekennzeichnet, daß das phosphatarme Flotat zum einen Teil dem Abwasser-Belebtschlamm-Gemisch vor der Nachklärung zugeführt und zum anderen Teil mit Flotationsgas angereichert und der Flotation wieder zugeführt wird.

8. Vorrichtung zur Durchführung des Verfahrens nach einem der Ansprüche 1 bis 7 mit einem Belebungsbecken und einer an das Belebungsbecken über einen Ablauf nachgeschalteten Nachkläreinrichtung mit Schlammrücklauf zum Belebungsbecken, dadurch gekennzeichnet, daß das Belebungsbecken (2) und/oder der Ablauf (3) des Belebungsbeckens (2) und/oder der Schlammrücklauf (6) mit einem als Eindicker wirkenden Flotationsbecken (12) mit Flotatablauf (15) und Flotatschlammableitung (19) verbunden ist, daß die Flotatschlammableitung (19) eine Wärmebehandlungszone (20) angeschlossen ist, daß der Wärmebehandlungszone (20) sowohl eine Anaerobbehandlungszone (23) als auch ein Zulauf (24) für Abwasser sowie eine Phosphatabtrenneinrichtung (26) nachgeschaltet sind und daß die Phosphatabtrenneinrichtung (26) einen Schlammrücklauf (27) zum Belebungsbecken (2) und einen Ablauf (28) für mit Phosphat angereicherte Flüssigkeit aufweist.

9. Vorrichtung nach Anspruch 8, dadurch gekennzeichnet, daß die Wärmebehandlungszone (20) als Begasungszone ausgebildet ist.

10. Vorrichtung nach Anspruch 8 oder 9, dadurch gekennzeichnet, daß die Phosphatabtrenneinrichtung (26) als Sedimentationsbecken ausgebildet ist.

11. Vorrichtung nach einem der Ansprüche 8 bis 10, dadurch gekennzeichnet, daß in dem Ablauf (28) der Phosphatabtrenneinrichtung eine Einrichtung (29) zur Phosphatfällung vorgesehen ist, die gegebenenfalls mit dem Belebungsbecken verbunden ist.

12. Vorrichtung nach einem der Ansprüche 8 bis 11, dadurch gekennzeichnet, daß der Wärmebehandlungszone (20) vor der Anaerobbehandlungszone (23) eine Mischstrecke nachgeschaltet ist und daß die Mischstrecke mit dem Zulauf für Abwasser verbunden ist.

13. Vorrichtung nach einem der Ansprüche 8 bis 12, dadurch gekennzeichnet, daß die Anaerobbehandlungszone (23) zweistu-Fig. (23a, 23b) ausgebildet ist und daß der Zulauf (24) für Abwasser mit der zweiten Stufe (23b) verbunden ist.

14. Vorrichtung nach einem der Ansprüche 8 bis 13, dadurch gekennzeichnet, daß der Flotatablauf einerseits (18) mit dem Belebungsbeckenablauf (3) und andererseits (15) mit einer an das Flotationsbecken (12) angeschlossene Sättigungseinrichtung (14) für Flotationsgas verbunden ist.

## Claims

1. A process for the biological purification of waste water containing phosphate, in which the waste water is treated with gas in an activating tank in the presence of activated sludge in order to decompose organic hydrocarbon compounds and that phosphate may be absorbed by microorganisms present in the activated sludge, the waste water-activated sludge mixture is discharged from the activating tank and is separated in a clarifying unit into cleansed, basically phosphate-free water and phosphate-containing sludge which is at least partially returned as recycled sludge to the activating tank, characterised in that waste water-activated sludge mixture is branched-off from the activating tank, and/or recycled sludge is branched-off from the clarifying unit, and subjected to flotation to thicken it ; low-phosphate floating material is discharged ; the high-phosphate flotation sludge is heated and after the heating, is treated anaerobically and mixed with an aqueous phase, preferably waste water ; the mixture obtained in this way is subsequently subjected to phosphate separation ; and the low-phosphate sludge which is thereby formed is returned to the activating tank, and the liquid enriched with phosphate is subjected to further treatment.

2. A process as claimed in Claim 1, characterised in that the liquid enriched with phosphate is subjected to phosphate precipitation and is possibly subsequently returned to the activating tank.

3. A process as claimed in Claim 1 or Claim 2, characterised in that the heating of the flotation sludge is carried out at a temperature of 20 to 35 °C.

4. A process as claimed in one of Claims 1 to 3, characterised in that the heating of the flotation sludge is carried out autothermally by treatment with air or oxygen.

5. A process as claimed in one of Claims 1 to 3, characterised in that the heating of the flotation sludge is carried out with the aid of external heat.

6. A process as claimed in one of Claims 1 to 5, characterised in that a pH-value of 4 to 7, preferably 5.5 to 6.5, is set during the anaerobic treatment.

7. A process as claimed in one of Claims 1 to 6, characterised in that the low-phosphate floating material is partially fed to the waste water-activated sludge mixture prior to clarification, and is partially enriched with flotation gas and returned to the flotation step.

8. Apparatus for carrying out the process claimed in one of Claims 1 to 7, comprising an activating tank and a clarifying device which is connected to the output end of the activating tank by way of a discharge pipe, and a sludge return pipe to the activating tank, characterised in that the activating tank (2) and/or the discharge pipe (3) of the activating tank (2) and/or the sludge return pipe (6), is connected to a flotation tank (12) which acts as a thickener, and which is provided with a floating material discharge pipe (15) and a flotation sludge-discharge pipe (19) ; that the flotation sludge-discharge pipe (19) is connected to a heat treatment zone (20) ; that the heat treatment zone (20) is followed by an anaerobic treatment zone (23) and by an inlet pipe (24) for waste water and a phosphate-separating device (26) ; and that the phosphate-separating device (26) has a sludge return pipe (27) leading to the activating tank (2) and a discharge pipe (28) for liquid enriched with phosphate.

9. Apparatus as claimed in Claim 8, characterised in that the heat treatment zone (20) is in the form of a gas treatment zone.

10. Apparatus as claimed in Claim 8 or Claim 9, characterised in that the phosphate-separating device (26) is in the form of a sedimentation tank.

11. Apparatus as claimed in one of Claims 8 to 10, characterised in that the discharge pipe (28) of the phosphate-separating device contains a device (29) for phosphate precipitation which may be connected to the activating tank.

12. Apparatus as claimed in one of Claims 8 to 11, characterised in that, prior to the anaerobic treatment zone (23), the heat treatment zone (20) is followed by a mixter section, and that the mixer section is connected to the waste water inlet.

13. Apparatus as claimed in one of Claims 8 to 12, characterised in that the anaerobic treatment zone (23) has two stages (23a, 23b) ; and that the waste water inlet (24) is connected to the second stage (23b).

14. Apparatus as claimed in one of Claims 8 to 13, characterised in that the floating material discharge pipe on one side (18) is connected to the activating tank discharge pipe (3), and on the other side (15) is connected to a saturating device (14) for flotation gas which is connected to the flotation tank (12).

## Revendications

1. Procédé pour l'épuration biologique d'eau résiduaire contenant des phosphates, dans lequel l'eau résiduaire est gazéifiée dans un bassin d'activation en présence de boue activée pour la décomposition de composés hydrocarbonés organiques et pour la collecte des phosphates par des micro-organismes présents dans la boue activée, le mélange eau résiduaire-boue activée est extrait du bassin d'activation et dans une post-décantation est partagé en une eau à épurer essentiellement exempte de phosphates et en une boue contenant des phosphates qui est au moins partiellement retournée au bassin d'activation sous forme de boue recyclée, caractérisé en ce que l'on dérive un mélange eau résiduaire-boue activée provenant du bassin d'activation et/ou de la boue recyclée provenant de la post-décantation et on le ou la soumet à flottation pour épaississement, on extrait le flottat pauvre en phosphates, on réchauffe la boue de flottation riche en phosphates et, après traitement thermique, on la soumet non seulement à un traitement anaérobie mais on la mélange également avec une phase aqueuse, de préférence de l'eau résiduaire, le mélange ainsi obtenu étant soumis finalement à une séparation de phosphates et la boue pauvre en phosphates en résultant étant retournée au bassin d'activation et le liquide enrichi en phosphates étant soumis à traitement ultérieur.

2. Procédé selon la revendication 1, caractérisé en ce que le liquide enrichi en phosphates est soumis à une précipitation des phosphates et, le cas échéant, est retourné finalement au bassin d'activation.

3. Procédé selon l'une des revendications 1 ou 2, caractérisé en ce que le traitement thermique de la boue de flottat est exécuté à une température allant de 20 à 35 °C.

4. Procédé selon l'une des revendications 1 à 3, caractérisé en ce que le traitement thermique de la boue de flottat est exécuté de manière autotherme par gazéification avec de l'air ou de l'oxygène.

5. Procédé selon l'une des revendications 1 à 3, caractérisé en ce que le traitement thermique de la boue de flottat est effectué avec l'aide de chaleur extérieure.

6. Procédé selon l'une des revendications 1 à 5, caractérisé en ce que, pendant le traitement anaérobie, on ajuste le pH a une valeur comprise entre 4 et 7, de préférence 5,5 et 6,5.

7. Procédé selon l'une des revendications 1 à 6, caractérisé en ce que le flottat pauvre en phosphates est amené pour une partie au mélange eau résiduaire-boue activée avant la post-décantation, et pour une autre partie est enrichi en gaz de flottation et soumis de nouveau à la flottation.

8. Dispositif pour la mise en œuvre du procédé selon l'une des revendications 1 à 7, comprenant un bassin d'activation et, raccordé par une sortie à ce bassin d'activation, une installation de post-décantation avec un retour de boues vers le bassin d'activation, caractérisé en ce que le bassin d'activation (2) et/ou la sortie (3) du bassin d'activation (2) et/ou le retour des boues (6) est raccordé à une cuve de flottation (12) agissant comme épaississeur avec une sortie de flottat (15) et une canalisation de boues de flottat (19), en ce que la canalisation de boues de flottat (19) est raccordée à une zone de traitement thermique (20), en ce que la zone de traitement thermique (20) est suivie non seulement d'une zone de traitement anaérobie (23) mais aussi d'une alimentation (24) pour l'eau résiduaire ainsi que d'une installation de séparation des phosphates (26) et en ce que l'installation de séparation des phosphates (26) comporte un retour de boues (27) vers le bassin d'activation (2) et une sortie (28) pour le liquide enrichi en phosphates.

9. Dispositif selon la revendication 8, caractérisé en ce que la zone de traitement thermique (20) est constituée comme une zone de gazéification.

10. Dispositif selon la revendication 8 ou 9, caractérisé en ce que l'installation de séparation des phosphates (26) est constituée comme une cuve à sédimentation.

11. Dispositif selon l'une des revendications 8 à 10, caractérisé en ce que à la sortie (28) de l'installation de séparation des phosphates, est prévue une installation (29) pour la précipitation des phosphates qui, le cas échéant, est raccordé au bassin d'activation.

12. Dispositif selon l'une des revendications 8 à 11, caractérisé en ce que la zone de traitement thermique (20) est raccordée avant la zone de traitement anaérobie (23) à une section de mélange et en ce que cette section de mélange est raccordée à l'alimentation en eau résiduaire.

13. Dispositif selon l'une des revendications 8 à 12, caractérisé en ce que la zone de traitement anaérobie (23) comporte deux étages (23a, 23b) et en ce que l'alimentation (24) pour l'eau résiduaire est raccordée au deuxième étage (23b).

14. Dispositif selon l'une des revendications 8 à 13, caractérisé en ce que la sortie de flottat est reliée d'une part (en 18) à la sortie du bassin d'activation (3), et d'autre part (en 15) avec une installation de saturation (14) pour le gaz de flottation, raccordée à la cuve de flottation (12).

0 087 128